# EUROPÄISCHE PATENTSCHRIFT

(11) **EP 3 085 509 B1**
(45) Veröffentlichungstag und Bekanntmachung des Hinweises auf die Patenterteilung: **09.05.2018**
(21) Anmeldenummer: 16161604.0
(22) Anmeldetag: 22.03.2016
(51) Int. Cl.: B29C 43/18, B62D 29/00

(54) **VERFAHREN ZUR HERSTELLUNG EINES HYBRIDBAUTEILS AUS BLECH UND FASERVERBUNDWERKSTOFF**
METHOD FOR PRODUCING A HYBRID COMPONENT MADE OF SHEET METAL AND FIBRE-REINFORCED COMPOSITE MATERIAL
PROCEDE DE FABRICATION D'UN COMPOSANT HYBRIDE EN TOLE ET MATERIAU RENFORCE PAR DES FIBRES

(30) Priorität: 27.03.2015 DE 102015104772
(43) Veröffentlichungstag der Anmeldung: 26.10.2016
(73) Patentinhaber: SGL Carbon SE, 65201 Wiesbaden (DE); Benteler SGL GmbH & Co. KG, 33102 Paderborn (DE); LKR Leichtmetallkompetenzzentrum Ranshofen GmbH, 5282 Braunau am Inn- Ranshofen (AT)
(72) Erfinder: Céspdes-Gonzales, Gilbert, 4910 Ried im Innkreis (AT); Ucsnik, Stephan, 5282 Ranshofen bei Braunau (AT); Opdemom, Hermann, 59269 Beckum (DE)
(74) Vertreter: Griepenstroh, Jörg

(56) Entgegenhaltungen:
- DE-A1-102012 218 711
- DE-A1-102013 222 425

## Beschreibung

Die vorliegende Erfindung betrifft ein Verfahren zur Herstellung eines Hybridbauteils gemäß den Merkmalen im Oberbegriff von Patenanspruch 1.

Aus dem Stand der Technik ist es bekannt für Kraftfahrzeuge aber auch für Wasser- oder Luftfahrzeuge Bauteile aus Faserverbundwerkstoff herzustellen oder aber auch metallische Bauteile mittels Faserverbundwerkstoffpatches zu verstärken.

Bei den Faserverbundwerkstoffbauteilen werden Faserwerkstoffe mit einem Harz versetzt und das Harz ausgehärtet. Hierdurch lässt sich ein besonders leichtes Bauteil erzeugen, welches eine hohe Festigkeit, jedoch nur geringe Duktilitätseigenschaften besitzt.

Faserverbundwerkstoffbauteile sind zum jetzigen Zeitpunkt nur mit erhöhtem technischem Aufwand vollautomatisiert herstellbar. Insbesondere weist die Herstellung von Faserverbundwerkstoffbauteilen eine höhere Taktzeit gegenüber der Herstellung von konventionellen Blechumformbauteilen auf.

Im Stand der Technik hat sich somit die Herstellung von Hybridbauteilen derart etabliert, dass ein Blechumformbauteil mit einem Verstärkungspatch aus Faserverbundwerkstoff versehen wird. Ein solches Herstellungsverfahren ist beispielsweise aus der DE 10 2011 050 701 A1 bekannt. Entweder ist das Verstärkungspatch bereits ebenfalls vorgeformt oder ein Verstärkungspatch wird in das bereits geformte Blechumformbauteil eingeformt.

Weiterhin ist aus der DE 10 2012 218 711 A1 die Herstellung eines Hybridbauteils bekannt, bei dem ein Organoblech mit einer Blechplatine in einem einzigen Prozessschritt umgeformt wird. Dieses Verfahren ist in der Formgebungsfreiheit aufgrund des zunächst im festen Zustand vorliegenden Harzes des Organoblechs beschränkt. Ferner kann es zu Ablösungen in der stoffschlüssigen Koppelung zwischen Organoblech und Metallblech aufgrund unterschiedlicher Ausdehnungen und/oder Schwindungen während der Umformung und/oder der Aushärtung kommen.

Aufgabe der vorliegenden Erfindung ist es daher, ausgehend vom Stand der Technik ein Herstellungsverfahren für ein Hybridbauteil aufzuzeigen, mit dem hohe Formgebungsfreiheitsgrade erreicht werden können, eine dauerhafte produktionssichere Verbindung von Faserwerkstoff und Metallplatine hergestellt werden kann und gleichzeitig kurze Taktzeiten realisierbar sind.

Die zuvor genannte Aufgabe wird erfindungsgemäß mit einem Verfahren zur Herstellung eines Hybridbauteils mit den Merkmalen im Patentanspruch 1 gelöst.

Vorteilhafte Ausführungsvarianten der vorliegenden Erfindung sind in den abhängigen Patentansprüchen beschrieben.

Das Verfahren zur Herstellung eines Hybridbauteils, wobei das Hybridbauteil ein metallisches Blechbauteil und ein Faserverbundwerkstoffbauteil aufweist, ist erfindungsgemäß gekennzeichnet durch folgende Verfahrensschritte:
- Bereitstellen einer Blechplatine,
- Anlegen eines flächigen mit Matrixharz versehenen Faserverbundhalbzeug an die Blechplatine oder eines flächigen Faserhalbzeuges, welches nach Anlegen mit Matrixharz versehen wird, so dass sich ein Faserverbundhalbzeug ergibt,

- wobei zwischen Blechplatine und Faserverbundhalbzeug eine Klebeschicht angeordnet wird,
- gemeinsames Umformen von Blechplatine und Faserverbundhalbzeug in einem Umformwerkzeug, wobei das Umformen für das Faserverbundhalbzeug als Nasspressverfahren durchgeführt wird.

Es ist somit möglich, Blechplatinen aus Stahllegierungen oder aber auch aus Leichtmetalllegierungen, insbesondere einer Aluminiumlegierung oder Magnesiumlegierung, zu verarbeiten. Auf diese wird entweder ein Faserverbundhalbzeug aufgelegt oder aber auf ein Faserverbundhalbzeug wird eine Blechplatine aufgelegt. Mithin wird ein flächiger Anlagenkontakt zwischen Blechplatine und flächigem Faserverbundhalbzeug durch das Anlegen hergestellt. Das Faserverbundhalbzeug kann dabei selbst einlagig oder auch mehrlagig ausgebildet sein und als Vlies, Gewebe oder in sonstiger flächiger Form bereitgestellt sein. Der flächige Anlagenkontakt kann auch derart geschehen, dass das Faserverbundhalbzeug auf die Blechplatine aufgelegt wird oder aber das Faserverbundhalbzeug bereits in dem Umformwerkzeug liegt und dann die Blechplatine darauf aufgelegt wird.

Die Klebeschicht selbst kann beispielsweise in Form einer Folie oder auch einer Schicht angelegt bzw. aufgelegt sein. Die Klebeschicht selbst kann jedoch auch auf die Blechplatine oder das Faserverbundhalbzeug aufgebracht sein, beispielsweise durch einen Sprühvorgang oder ein sonstiges Auftragungsverfahren.

Erfindungswesentlich wird sodann das Umformen durchgeführt, insbesondere als Pressumformen und/oder Tiefziehumformen und dabei das mit Matrixharz versehene Faserverbundhalbzeug zusammen, insbesondere gleichzeitig, mit der Blechplatine unter Eingliederung der Klebeschicht zu dem Hybridbauteil umgeformt.

Hierzu ist insbesondere das Matrixharz während und besonders bevorzugt vor dem Umformvorgang im flüssigen Zustand. Dies kann auch einen bereits teilausgehärteten Zustand mit umfassen aber auch einen pastösen oder teigigen Zustand. Letztlich ist das Matrixharz bevorzugt nicht vollständig vorgehärtet bzw. ausgehärtet, wodurch die Formgebungsfreiheitsgrade mit dem erfindungsgemäßen Herstellungsverfahren des Hybridbauteils erhöht werden. In besonders bevorzugter Ausführung des erfindungsgemäßen Verfahrens wird das gleichzeitige Umformen, auch als simultanes Umformen bezeichnet und für das Faserverbundhalbzeug als Nasspressen durchgeführt. Dies bedeutet, dass das Matrixharz überwiegend, bevorzugt vollständig sich während der Umformung im flüssigen Zustand befindet. Hierzu ist entweder das Faserverbundhalbzeug mit Harz vorgetränkt oder aber das Harz wird auf das Faserverbundhalbzeug aufgetragen bevor es in das Umformwerkzeug eingelegt wird bzw. während sich das Faserverbundhalbzeug im Umformwerkzeug befindet wird das Matrixharz aufgetragen. Sofern es nicht vollständig vorgetränkt ist, erfolgt der Auftrag des Matrixharzes, insbesondere auf der der Klebeschicht gegenüberliegenden Seite, so dass das Matrixharz dann aufgrund eines Kapillareffektes und/oder durch das Verpressen beim Umformen vollständig die Fasern des Faserverbundhalbzeuges durchdringt.

In besonders bevorzugter Ausführungsvariante wird für das Nasspressverfahren eine latent reaktive Matrixharzmischung verwendet. Ein solches latent reaktives Matrixharz zeichnet sich dadurch aus, dass es nach der Applikation auf das Faserhalbzeug für eine längere Zeit, auch bei Raumtemperatur, lagerstabil ist. Das latent reaktive Matrixharz weist eine höhere Viskosität auf, die bei einer erhöhten Verarbeitungstemperatur auf ein für die Tränkung des Faserhalbzeuges günstiges Niveau gebracht wird. Durch die Erhöhung der Verarbeitungstemperatur, mithin das Heizen des Werkzeuges und/oder das Heizen der Blechplatine, lassen sich ähnliche Zykluszeiten für die Bauteilaushärtung realisieren, wie beim Nasspressen von konventionellen hochreaktiven Epoxidharzsystemen.

Typische Bestandteile einer latent reaktiven Matrixharzmischung sind Harze, latente Härter, reaktionsbeschleunigende Stoffe sowie weitere Additive. Für Epoxidharze kommen beispielsweise flüssige und feste Bisphenol-A-Epichlorhydrinharze mit mittleren molaren Massen bis 2000 g/mol zum Einsatz. Ein bekannter latenter Härter ist Dicyandiamid. Aufgrund ihrer Eigenschaften kommen ähnliche Formulierungen unter anderem in der Prepregherstellung zum Einsatz sowie als Grundkomponenten für heißhärtende Strukturklebstoffe. Das latent reaktive Matrixharz kann bevorzugt im flüssigen Zustand, aber auch insbesondere im pastösen, teigigen oder pulverförmigen Zustand verarbeitet werden. Letzterenfalls schmilzt dieses dann durch die Wärme im Pressenwerkzeug und/oder die Wärme der erwärmten Blechplatine und dringt dadurch beim Umformvorgang vollständig in das Faserhalbzeug ein.

Der Einsatz von latent reaktiven Matrixharzen zum Nasspressen von FVK-Leichtbauteilen bietet mehrere Vorteile. Die Möglichkeit der zeitlichen Entkopplung von Harzmischung, Harzauftrag und Formpressen erlaubt Kosteneinsparungen im Vergleich zu konventionellen Prozessketten im Nasspressverfahren: bei entsprechender Auftragsleistung kann eine zentrale Dosier- und Applikationsanlage genutzt werden, um mehrere Pressen zu beschicken, beispielsweise unter Verwendung eines Speichers für Textil-Harzgemisch-Halbzeuge. Aufgrund der geringen Reaktivität der diskutierten Harzgemische können die Verfahrensschritte Mischen und Dosieren ebenfalls entkoppelt werden. Hieraus ergeben sich weitere Kosteneinsparpotenziale, wie zum Beispiel durch den Einsatz von günstigeren Einkomponentendosieranlagen.

Besonders bevorzugt kann weiterhin eine Klebeschicht aus einem einkomponentigen Klebstoff verwendet werden, welcher besonders bevorzugt ein thermoplastischer oder ein duroplastischer Klebstoff ist, oder auf Epoxidbasis oder auf Elastomerbasis ausgebildet ist. Es ist jedoch auch vorstellbar andere Klebstoffe, insbesondere einkomponentige oder zweikomponentige Klebstoffe sind denkbar. Ebenfalls ist es vorstellbar thermisch aktivierbare Klebstoffe zu verwenden und/oder insbesondere auch anaerob aushärtbare Klebstoffe.

Der Klebstoff kann sich während des Umformvorganges elastisch und/oder plastisch derart verformen, dass ein vollflächiger Anlagenkontakt von Faserverbundhalbzeug zu Klebeschicht sowie Klebeschicht zu Blechplatine hergestellt ist. Die damit nach Abschluss der Umformung hergestellte stoffschlüssige Klebeverbindung ist somit im Wesentlichen vollflächig ausgebildet. Produktionsschwankungen können durch die elastisch verformbare Klebeschicht ausgeglichen werden. Ebenfalls können unterschiedliche thermische Ausdehnungen der Blechplatine in Relation zu dem Faserverbundhalbzeug, insbesondere im Anlagenbereich durch die elastische Klebeschicht kompensiert werden, so dass immer ein vollflächiger Anlagenkontakt mit der Klebeschicht hergestellt ist.

Besonders bevorzugt härtet die Klebeschicht elastisch aus. Beim späteren Einsatz des Hybridbauteils, beispielsweise in einem Kraftfahrzeug oder auch in einem Flugzeug können somit unterschiedliche Temperaturen während des Betriebs und damit verbundene Ausdehnungen von Blechbauteil zu Faserverbundwerkstoffbauteil durch die elastische Klebeschicht kompensiert werden. Weiterhin ist es möglich Vibrationen oder sonstige Schwingungen durch die elastische Klebeschicht zu dämpfen, so dass es gerade nicht in dem Koppelungsbereich zu Ermüdungsrissen oder sonstigen ungewollten Spannungen kommt.

Weiterhin besonders bevorzugt wird eine Blechplatine aus einem Leichtmetall, insbesondere aus Aluminiumwerkstoff, besonders bevorzugt einer 5000er, 6000er oder 7000er Aluminiumlegierung eingesetzt. Bevorzugt werden Aluminiumlegierungen der Typen AW5XXXX, AW6XXXX, AW7XXXX verwendet. Auch vorstellbar ist es, eine Blechplatine aus einer Magnesiumlegierung zu verwenden. Ebenfalls ist es im Rahmen der Erfindung vorstellbar eine Blechplatine aus einer Titanlegierung zu verwenden. Auch vorstellbar ist es, eine Blechplatine aus einer Stahllegierung zu verwenden.

Im Rahmen der Erfindung ist es bevorzugt möglich, dass insbesondere durch Wärmeeinwirkung der Aushärteprozess des Matrixharzes eingeleitet wird, jedoch auch die Umformbarkeit der Blechplatine erhöht wird. Hierzu ist es denkbar, entweder die Blechplatine vor der Umformung zumindest partiell bevorzugt vollständig zu erwärmen oder ergänzend oder alternativ das Umformwerkzeug zu erwärmen. Zur Aushärtung des Matrixharzes wird hierzu eine Temperatur zwischen 100°C und 200°C, insbesondere 130°C bis 170°C, besonders bevorzugt zwischen 140°C und 160°C verwendet. Zum Umformen der Blechplatine können jedoch auch Temperaturen im Falle von Leichtmetalllegierungen zwischen 400°C und 600°C, insbesondere 450°C und 550°C und bevorzugt von 480°C verwendet werden sowie bei der Umformung von Stählen, bevorzugt Temperaturen unterhalb der Rekristallisationstemperatur, insbesondere unter AC1 Temperatur, bevorzugt unter 600°C. Ganz besonders bevorzugt wird im Rahmen der Erfindung bei einem Stahlwerkstoff ein Kaltumformverfahren angewendet, wobei sich die Blechplatine auf Kaltumformtemperatur befindet. Ebenfalls ist es im Rahmen der Erfindung möglich die Blechplatine bei Raumtemperatur umzuformen. Im Falle der Erwärmung zur Formgebung und/oder zum Härten der metallischen Komponente des Hybridbauteils findet dann auch gleichzeitig eine Aushärtung des Matrixharzes aufgrund der abgegebenen Wärme der Blechplatine an das Matrixharz des Faserverbundhalbzeuges statt.

Ein bevorzugtes Ausführungsbeispiel sieht vor, dass eine Blechplatine aus einer Leichtmetalllegierung bevorzugt aus einer Aluminiumlegierung auf 400°C vorerwärmt wird. Die vorerwärmte Blechplatine wird in ein Umformwerkzeug eingelegt, wobei das Umformwerkzeug eine Temperatur von 100°C aufweist. Die Blechplatine wird dann zusammen mit dem Faserverbundhalbzeug umgeformt und kühlt sich in dem Umformwerkzeug ab. Für das Aushärten der Klebeschicht und/oder des Matrixharzes wird bis auf eine Resttemperatur von ca. 130°C gekühlt. Das Aushärten der Klebeschicht und/oder des Harzes des Faserverbundwerkstoffes wird dann bevorzugt eine Resttemperatur des Hybridbauteils von 130°C realisiert, in dem das hergestellte Faserverbundbauteil bei dieser Temperatur aus dem Umformwerkzeug entnommen wird.

Wird die Blechplatine zuvor nicht erwärmt, ist es möglich das Umformwerkzeug, insbesondere nur partiell zu beheizen. Im Falle des partiellen Beheizens des Umformwerkzeuges wird nur der Bereich beheizt, der flächenmäßig das Faserverbundwerkstoffbauteil an dem umgeformten Hybridbauteil überdeckt. Hierdurch wird eine gezielte Aktivierung des Härtevorganges des Matrixharzes eingeleitet, was gerade unter energetischen Aspekten einen nur geringen Energieeintrag aufgrund der partiellen Beheizung benötigt.

Weiterhin ist es im Rahmen der Erfindung vorstellbar, dass zunächst nur ein Teilaushärten des Matrixharzes erfolgt und das hergestellte Hybridbauteil in einem späteren KTL-Verfahren nochmals einen Wärmeeintrag erfährt und hierdurch der Aushärteprozess vollständig abgeschlossen wird sowie das Blechbauteil insbesondere eine Antikorrosionsbeschichtung erfährt.

Nach Abschluss des Umformvorganges ist es im Rahmen der Erfindung insbesondere vorgesehen, dass das umformtechnisch hergestellte Hybridbauteil unter Druck und/oder Temperatur in dem Umformwerkzeug aushärtet. Insbesondere erfolgt ein Anpressen im unteren Totpunkt, so dass gerade im Anlagenbereich der eingegliederten Klebeschicht jeweils eine vollflächige Anlage von Faserverbundwerkstoffbauteil und Metallbauteil an der jeweiligen Seite der Klebeschicht erfolgt.

Der Aushärtevorgang unter Druck und/oder Temperatureinwirkung des Umformwerkzeuges kann bevorzugt maximal 3 Min. betragen, so dass besonders kurze Taktzeiten mit dem erfindungsgemäßen Verfahren realisiert werden können. Dies bedeutet gleichsam jedoch nicht, dass das Matrixharz und/oder die Klebeschicht in diesem Zeitrahmen vollständig ausgehärtet sind. Lediglich ein anschließendes Entformen sowie ein Transfer wirken sich nicht negativ auf die hergestellte Verbindung des Hybridbauteils aus.

Ein weiterer wesentlicher Vorteil des Einsatzes der Klebeschicht sowie des gleichzeitigen Umformens von Faserverbundhalbzeug und Blechplatine ist das die Klebeschicht als Dichtung gegen Verschmutzungen im Randbereich während der Herstellung als auch im späteren Einsatz des Hybridbauteils dienen kann. Die Blechplatine wird bevorzugt vor Aufbringen der Klebeschicht gereinigt. Sollten jedoch noch nach dem Reinigungsprozess restliche Verschmutzungen gegenüber der Oberfläche der Blechplatine überstehen, so ist es durch die Elastizität der Klebeschicht möglich, dass die Verschmutzungen in die Klebeschicht eindringen und somit bis zu einem gewissen Grad der Verschmutzung kompensiert werden können, ohne Beeinflussung der damit hergestellten Verbindung. Produktionsschwankungen können dadurch vermieden werden.

Weiterhin besonders bevorzugt ist die Klebeschicht derart ausgebildet, dass sie Öle und/oder Fette, welche als Produktionsrückstände an der angelieferten Blechplatine vorhanden sein können, aufnimmt, ohne dass sich diese nachteilig auf die Festigkeit der damit hergestellten Klebeverbindung auswirken.

Damit die Klebeschicht insbesondere im Randbereich als Dichtung ausgebildet sein kann, ist diese flächenmäßig größer als das Faserverbundhalbzeug ausgebildet. Dies bedeutet, dass die Klebeschicht bevorzugt zumindest teilweise umlaufend, insbesondere ganz umlaufend über das Faserverbundhalbzeug überstehend ausgebildet ist. Insbesondere wird somit auch ein Ausdringen des Harzes aus dem Faserverbundhalbzeug vermieden.

Besonders bevorzugt wird das Verfahren verwendet bei einer Blechplatine, die flächenmäßig größer ausgebildet ist, als das Faserverbundhalbzeug. Mithin werden Blechumformbauteile hergestellt, die eine lokale Faserverbundwerkstoffbauteilverstärkung bzw. ein Faserverbundwerkstoffpatch aufweisen. Im Rahmen der Erfindung wäre es jedoch auch vorstellbar, dass der flächenmäßige Anteil der Blechplatine und der flächenmäßige Anteil des Faserverbundhalbzeuges gleichgroß sind oder auch dass das Faserverbundhalbzeug flächenmäßig größer gegenüber dem Blechbauteil ist.

Weiterhin bevorzugt wird die Faserwerkstoffschicht des Faserverbundhalbzeuges an der dem Umformwerkzeug zugewandten Seite, mithin an der der Klebeschicht gegenüberliegenden Seite, derart in ihrer Oberfläche modifiziert, dass diese besser über das Werkzeug gleitet. Insbesondere erfolgt diese Modifizierung in Bereichen mit hohen zu erwartenden Umformgraden. Es kann jedoch auch das gesamte Faserverbundhalbzeug auf dieser Seite oder vollständig behandelt werden. Hierzu werden bevorzugt die einzelnen Fasern des Faserwerkstoffes geschlichtet. Insbesondere erfolgt dies bei Durchführung der Fasern durch ein Schlichtbad. Auch können die Fasern beschichtet werden. Im Sinne der Erfindung kann jedoch auch eine zusätzliche Kunststoffschicht auf das Faserverbundhalbzeug aufgebracht werden, welche die beim Umformen auftretende Haftreibung zwischen Werkzeug und Faserverbundhalbzeug minimiert.

Die Klebeschicht weist insbesondere während der Umformung eine Elastizität auf, so dass Verformungen des Faserverbundhalbzeuges durch die Elastizität der Klebeschicht kompensiert werden.

Weiterhin besonders bevorzugt wird zwischen dem Faserverbundhalbzeug und der Klebeschicht eine Abstandsschicht eingebracht. Diese Abstandsstandschicht kann auch als Zwischenschicht bezeichnet werden. Sie ist aus einem Gewebe oder Gelege oder auch einem Vlies oder trockenen Fasern ausgebildet. Diese nehmen das beim Umformen, insbesondere beim Nasspressen aus dem Faserverbundhalbzeug austretende Harz auf, so dass dieses nicht in die Klebeschicht eindringt. Insbesondere ist das Eindringen des Harzes in die Klebeschicht nicht gewünscht, da das Harz im Vergleich zu der Klebeschicht steif und spröde ist. Die Klebeschicht selbst soll gut verformbar und ausdehnbar sein. Besonders bevorzugt die Abstandsschicht wird dann mit dem in die Abstandsschicht eingepressten Harz aus dem Faserverbundhalbzeug verklebt und auf der Seite der Klebeschicht mit der Klebeschicht verklebt, so dass eine stoffschlüssige Verbindung von Faserverbundhalbzeug und Blechplatine an dem umgeformten Blechbauteil hergestellt wird.

Weiterhin besonders bevorzugt kann im Bereich der Klebeschicht die Blechplatine selbst angeraut sein. Hierdurch wird eine bessere Haftung der Klebeschicht ermöglicht.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung.
- Figur 1: zeigt eine Blechplatine mit aufgelegter Klebeschicht und aufgeklebtem Faserverbundhalbzeug in einer Schnittansicht,
- Figur 2: zeigt die Blechplatine in einer Draufsicht gemäß Schnittlinie I-I;
- Figur 3: zeigt einen Querschnitt durch ein Pressumformwerkzeug bei der Herstellung des erfindungsgemäßen Hybridbauteils;
- Figur 4: zeigt eine mit dem erfindungsgemäßen Verfahren hergestellte Hybrid B-Säule in perspektivischer Ansicht;
- Figur 5: eine Schnittansicht gemäß der Schnittlinie V-V;
- Figur 6: eine alternative Ausgestaltung zu Figur 5 und
- Figur 7: die Ausführungsvariante aus Figur 1 mit zusätzlicher Abstandsschicht.

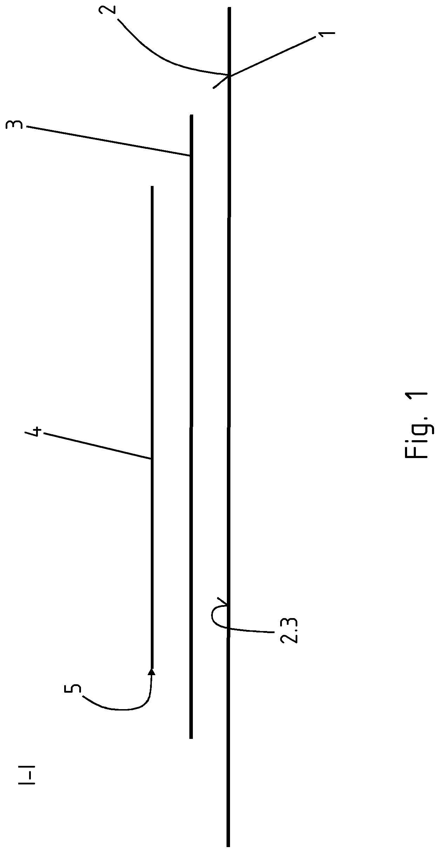

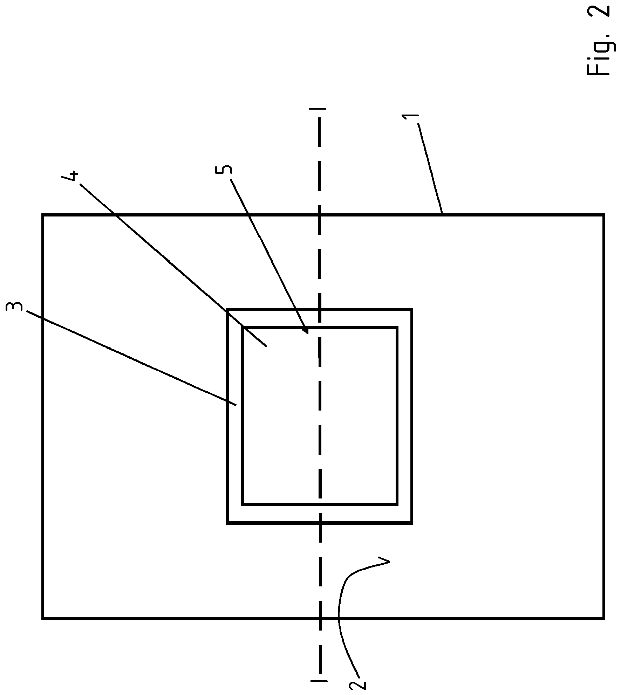

Figuren 1 und 2 zeigen eine Blechplatine 1, auf deren Oberseite 2 eine Klebeschicht 3 aufgebracht ist. Die Blechplatine 1 kann bevorzugt in einem Bereich 2.3 der Oberseite, auf dem die Klebeschicht 3 angeordnet ist, aufgeraut sein. Auf die Klebeschicht 3 wiederum ist eine Lage eines Faserverbundhalbzeuges 4, welches mit nicht näher dargestelltem Matrixharz versetzt ist, aufgebracht. Gut zu erkennen in Figur 1 und 2 ist, dass der flächenmäßige Anteil der Blechplatine 1 gegenüber dem Faserverbundhalbzeug 4 größer ist. Jedoch ist auch die Klebeschicht 3 flächenmäßig größer ausgebildet als das Faserverbundhalbzeug 4. Somit steht die Klebeschicht 3 umlaufend um einen Rand 5 des Faserverbundhalbzeuges 4 über und verhindert somit während der Produktion und im späteren Betrieb ein Eindringen von Schmutzpartikeln zwischen Faserverbundhalbzeug und Blechplatine.

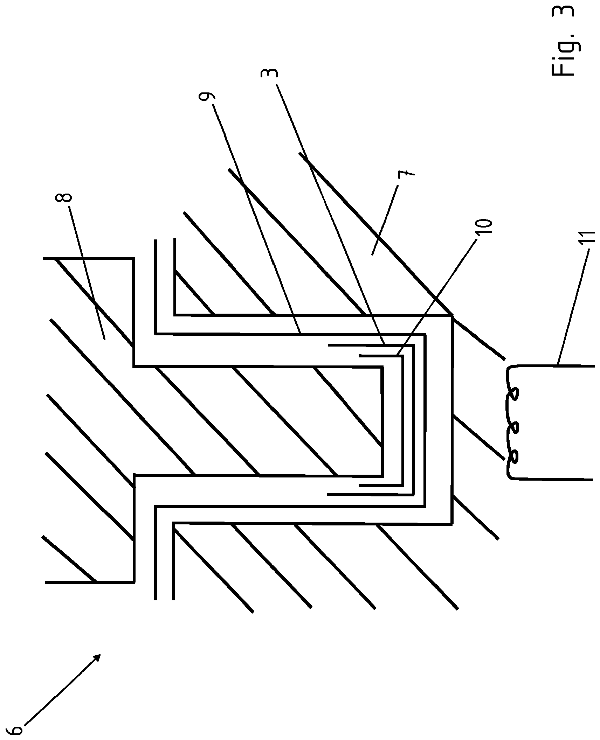

Figur 3 zeigt einen Umformvorgang mit einem erfindungsgemäßen Umformwerkzeug, insbesondere Pressumformwerkzeug 6 aufweisend ein Oberwerkzeug 7 und ein Unterwerkzeug 8. Das Oberwerkzeug 7 fährt dabei in Form eines Stempels in das Unterwerkzeug 8 ein und formt gleichzeitig die Blechplatine 1 zu dem metallischen Blechbauteil 9 um und das Faserverbundhalbzeug 4 zu dem Faserverbundwerkstoffbauteil 10, unter Eingliederung der Klebeschicht 3. Ferner ist ein Heizelement 11 vorgesehen, um nach Abschluss des Umformvorganges zumindest partiell zu erwärmen und damit den Aushärtevorgang des Matrixharzes einzuleiten.

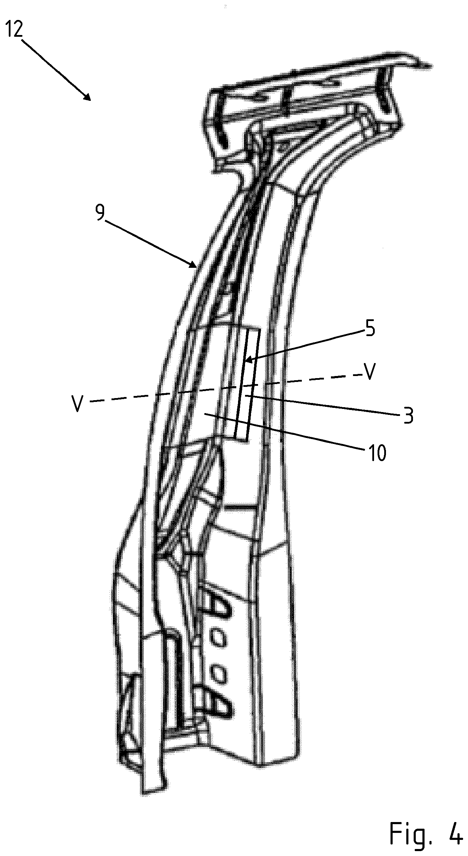

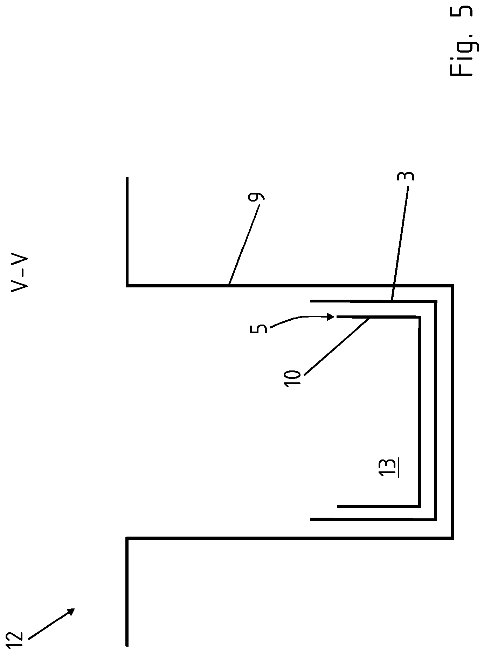

Figuren 4 und 5 zeigen das hergestellte Hybridbauteil 12 in Form einer B-Säule. Zu erkennen ist, dass das Blechbauteil 9 flächenmäßig größer ausgebildet ist als das in einem mittleren Bereich angeordnete Faserverbundwerkstoffbauteil 10, welches als Verstärkungspatch eingebracht ist. Über den Rand des Faserverbundwerkstoffbauteils 10 überstehend ist die Klebeschicht 3 ausgebildet, so dass keine Verschmutzungen eindringen können.

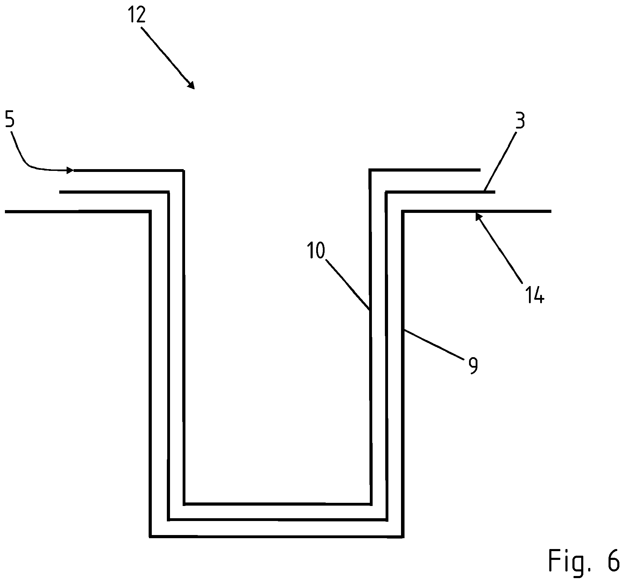

Figur 5 zeigt dabei eine Schnittansicht gemäß der Schnittlinie V-V aus Figur 4. Gut zu erkennen ist, dass hier das Verstärkungspatch nur in einem inneren Bereich 13 des Hybridbauteils 12 ausgebildet ist. Figur 6 zeigt dazu eine alternative Ausführungsvariante gemäß Schnittlinie V-V aus Figur 4, in der gut zu erkennen ist, dass das Faserverbundwerkstoffbauteil 10 sowie die Klebeschicht 3 das Blechumformbauteil 9 auch an den äußeren Flanschen 14 umgreift. Die Ausgestaltungsvarianten gemäß Figur 5 sowie Figur 6 sind jeweils durch gleichzeitiges Umformen von Blechbauteil 9 und Faserverbundwerkstoffbauteil 10 hergestellt, wobei der dazu insbesondere notwendige Anpressdruck zum Herstellen eines flächigen Anlagenkontaktes von Faserverbundwerkstoffbauteil 10 zu Klebeschicht 3 und Klebeschicht 3 zu Blechbauteil 9 sichergestellt ist. Auch hier steht wiederum die Klebeschicht 3 seitlich über den Rand 5 des Faserverbundwerkstoffbauteils 10 zum Verhindern des Eindringens von Verschmutzungen über.

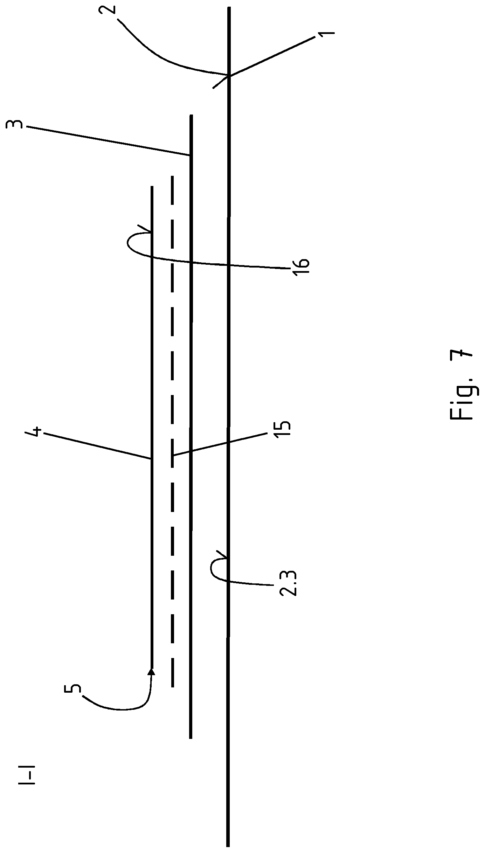

Figur 7 zeigt eine analoge Ausgestaltungsvariante zu Figur 1. Zusätzlich ist hier jedoch zwischen Klebeschicht 3 und Faserverbundhalbzeug 4 eine Abstandsschicht 15 angeordnet. Weiterhin ist es möglich, dass auf der dem Umformwerkzeug zugewandten Seite 16 des Faserverbundhalbzeuges 4 eine reibungsvermindernde Oberflächenbehandlung vorgenommen ist. Dies kann beispielsweise durch eine Beschichtung erfolgen. Auch ist es möglich die Fasern des Faserverbundhalbzeuges 4 zu schlichten. Beispielweise können alle Fasern geschlichtet werden, durch ein chemisches Schlichtverfahren, in dem die Fasern ein Tauchbad durchlaufen, in welchem eine Schlichte vorhanden ist. Auch ist es möglich, nur die dem Werkzeug zugewandte Seite 16 zu schlichten, beispielsweise mit einem gleitenden Schlicht.

### Bezugszeichen:

- 1 -: Blechplatine
- 2 -: Oberseite zu 1
- 2.3 -: Oberseite im Bereich der Klebeschicht
- 3 -: Klebeschicht
- 4 -: Faserverbundhalbzeug
- 5 -: Rand zu 4
- 6 -: Pressumformwerkzeug
- 7 -: Oberwerkzeug
- 8 -: Unterwerkzeug
- 9 -: Blechbauteil
- 10 -: Faserverbundwerkstoffbauteil
- 11 -: Heizelement
- 12 -: Hybridbauteil
- 13 -: innerer Bereich
- 14 -: Flansch
- 15 -: Abstandsschicht
- 16 -: Seite

## Patentansprüche

1. Verfahren zur Herstellung eines Hybridbauteils (12) aufweisend ein metallisches Blechbauteil (9) und ein Faserverbundwerkstoffbauteil (10), **gekennzeichnet, durch** folgende Verfahrensschritte:
- Bereitstellen einer Blechplatine (1),
- Anlegen eines flächigen mit Matrixharz versehenen Faserverbundhalbzeug (4) an die Blechplatine (1) oder eines flächigen Faserhalbzeuges, welches nach Anlegen mit Matrixharz versehen wird, so dass sich ein Faserverbundhalbzeug (4) ergibt,
- wobei zwischen Blechplatine (1) und Faserverbundhalbzeug (4) eine Klebeschicht (3) angeordnet wird,
- Gemeinsames Umformen von Blechplatine (1) und Faserverbundhalbzeug (4) in einem Umformwerkzeug, wobei das Umformen für das Faserverbundhalbzeug (4) als Nasspressverfahren durchgeführt wird.

2. Verfahren nach Anspruch 1, **dadurch gekennzeichnet, dass** die Klebeschicht (3) einen thermoplastischen oder duroplastischen Klebstoff oder dass die Klebeschicht einen Klebstoff auf Elastomerbasis oder auf Epoxidbasis aufweist und/oder dass die Klebeschicht (3) Verschmutzungen der Blechplatine (1), insbesondere Öl und/oder Fett, der Blechplatine (1) aufnimmt.

3. Verfahren nach Anspruch 1 oder 2, **dadurch gekennzeichnet, dass** die Klebeschicht (3) elastisch aushärtet.

4. Verfahren nach einem der vorhergehenden Ansprüche, **dadurch gekennzeichnet, dass** eine Blechplatine (1) aus einem Leichtmetall, insbesondere einem Aluminiumwerkstoff, bevorzugt einer 5000er, 6000er oder 7000er Aluminiumlegierung verwendet wird oder dass eine Blechplatine (1) aus einem Stahlwerkstoff verwendet wird.

5. Verfahren nach einem der vorhergehenden Ansprüche, **dadurch gekennzeichnet, dass** das Matrixharz bei Einlegen in das Umformwerkzeug sich in einem flüssigen Zustand befindet und/oder dass das Matrixharz nach Auflegen mindestens einer Faserlage auf die Blechplatine (1) auf die Faserlage aufgetragen wird.

6. Verfahren nach einem der vorhergehenden Ansprüche, **dadurch gekennzeichnet, dass** als Fasern des Faserverbundwerkstoffes Kohlefasern, Glasfasern, Aramidfasern, Metallfasern, Biofasern oder Mischformen der zuvor genannten Fasertypen eingesetzt werden.

7. Verfahren nach einem der vorhergehenden Ansprüche, **dadurch gekennzeichnet, dass** die Blechplatine (1) vor dem Umformen, insbesondere vor dem Anlegen des Faserverbundhalbzeuges (4) erwärmt wird oder dass das Umformwerkzeug erwärmt wird, insbesondere auf eine Temperatur zwischen 100 und 200°C, insbesondere 130 bis 170°C, bevorzugt zwischen 140 und 160°C.

8. Verfahren nach dem vorhergehenden Anspruch, **dadurch gekennzeichnet, dass** das Umformwerkzeug nur partiell beheizt wird, insbesondere im Bereich des Faserverbundhalbzeuges (4).

9. Verfahren nach einem der vorhergehenden Ansprüche, **dadurch gekennzeichnet, dass** nach dem Umformen das Hybridbauteil (12) einem KTL Verfahren unterzogen wird.

10. Verfahren nach einem der vorhergehenden Ansprüche, **dadurch gekennzeichnet, dass** ein Pressumformwerkzeug (6) verwendet wird oder dass ein Umformwerkzeug mit Niederhalter verwendet wird.

11. Verfahren nach einem der vorhergehenden Ansprüche, **dadurch gekennzeichnet, dass** das geformte Hybridbauteil unter Druck und/oder Temperatur in dem Umformwerkzeug zumindest teilaushärtet, wobei das Teilaushärten insbesondere maximal 3 Minuten dauert.

12. Verfahren nach einem der vorhergehenden Ansprüche, **dadurch gekennzeichnet, dass** voneinander verschiedene Ausdehnungen und/oder Schwindungen von umgeformter Blechplatine (1) und umgeformten Faserverbundhalbzeug (4) durch die Klebeschicht (3) derart kompensiert werden, dass ein vollflächiger Anlagenkontakt zwischen Blechplatine (1) und Faserverbundhalbzeug (4) mittels stoffschlüssiger Klebeverbindung hergestellt wird.

13. Verfahren nach einem der vorhergehenden Ansprüche, **dadurch gekennzeichnet, dass** die Blechplatine (1) flächenmäßig größer als das Faserverbundhalbzeug (4) ist.

14. Verfahren nach einem der vorhergehenden Ansprüche, **dadurch gekennzeichnet, dass** die Klebeschicht (3) flächenmäßig größer ist gegenüber dem Faserverbundhalbzeug (4), so dass die Klebeschicht (3) randseitig zumindest teilweise über das Faserverbundhalbzeug (4) übersteht.

15. Verfahren nach einem der vorhergehenden Ansprüche, **dadurch gekennzeichnet, dass** das Faserverbundhalbzeug (4) zumindest in Bereichen mit hoher zu erwartender Umformung auf der dem Umformwerkzeug zugewandten Seite (16) einer reibungsvermindernden Oberflächenbehandlung unterzogen wird, insbesondere durch Schlichten.

16. Verfahren nach einem der vorhergehenden Ansprüche, **dadurch gekennzeichnet, dass** eine Abstandsschicht (15) zwischen Faserverbundhalbzeug (4) und Klebeschicht (3) angeordnet wird.

17. Verfahren nach einem der Ansprüche 1 bis 16, **dadurch gekennzeichnet, dass** bei dem Nasspressverfahren ein latent reaktives Matrixharz verwendet wird, insbesondere wird ein pulverförmiges, teigiges pastöses oder flüssiges latent reaktives Matrixharz verwendet.

## Claims

1. Method for manufacturing a hybrid component (12) comprising a metallic sheet metal component (9) and a fibre composite component (10), **characterised by** the following method steps:
- providing a sheet metal blank (1),
- applying a flat fibre composite semi-finished product (4) provided with matrix resin on the sheet metal blank (1) or applying a flat fibre semi-finished product, which is provided with matrix resin after being applied, such that a fibre composite semi-finished product (4) results,
- wherein an adhesive layer (3) is arranged between sheet metal blank (1) and fibre composite semi-finished product (4),
- jointly forming sheet metal blank (1) and fibre composite semi-finished product (4) in a forming tool, wherein the forming for the fibre composite semi-finished product (4) is carried out as a wet pressing process.

2. Method according to claim 1, **characterised in that** the adhesive layer (3) has a thermoplastic or duroplastic adhesive or **in that** the adhesive layer has an adhesive based on elastomer or epoxide and/or **in that** the adhesive layer (3) absorbs impurities from the sheet metal blank (1), in particular oil and/or grease, from the sheet metal blank (1).

3. Method according to claim 1 or 2, **characterised in that** the adhesive layer (3) elastically hardens.

4. Method according to any one of the preceding claims, **characterised in that** a sheet metal blank (1) made of lightweight metal, in particular an aluminium material, preferably a 5000, 6000 or 7000 series aluminium alloy is used or **in that** a sheet metal blank (1) made of a steel material is used.

5. Method according to any one of the preceding claims, **characterised in that** the matrix resin is located in a liquid state when it is inserted into the forming tool and/or **in that** the matrix resin is applied on the fibre layer after applying at least one fibre layer on the sheet metal blank (1).

6. Method according to any one of the preceding claims, **characterised in that** carbon fibres, glass fibres, aramid fibres, metal fibres, bio fibres or mixed forms of the previously mentioned fibre types are used as fibres of the fibre composite.

7. Method according to any one of the preceding claims, **characterised in that** the sheet metal blank (1) is heated prior to forming, in particular prior to applying the fibre composite semi-finished product (4) or **in that** the forming tool is heated, in particular to a temperature of between 100 and 200°C, in particular 130 to 170°C, preferably between 140 and 160°C.

8. Method according to any one of the preceding claims, **characterised in that** the forming tool is heated only partially, in particular in the region of the fibre composite semi-finished product (4).

9. Method according to any one of the preceding claims, **characterised in that** the hybrid component (12) is subjected to a KTL process after forming.

10. Method according to any one of the preceding claims, **characterised in that** a press forming tool (6) is used or **in that** a forming tool with a downholder is used.

11. Method according to any one of the preceding claims, **characterised in that** the shaped hybrid component at least partially hardens under pressure and/or temperature in the forming tool, wherein the partial hardening lasts in particular maximum 3 minutes.

12. Method according to any one of the preceding claims, **characterised in that** expansions and/or shrinkages, differing from each other, of formed sheet metal blank (1) and formed fibre composite semi-finished product (4) are compensated by the adhesive layer (3) such that a full-surface resting contact between sheet metal blank (1) and fibre composite semi-finished product (4) is produced by means of a firm adhesive bond.

13. Method according to any one of the preceding claims, **characterised in that** the sheet metal blank (1) is larger than the fibre composite semi-finished product (4) in terms of surface.

14. Method according to any one of the preceding claims, **characterised in that** the adhesive layer (3) is larger with respect to the fibre composite semi-finished product (4) in terms of surface such that the adhesive layer (3) protrudes over the fibre composite semi-finished product (4) at least partially at the edge.

15. Method according to any one of the preceding claims, **characterised in that** the fibre composite semi-finished product (4) is subjected to a friction-reducing surface treatment, in particular by smoothing, at least in regions with high, anticipated forming on the side (16) facing the forming tool.

16. Method according to any one of the preceding claims, **characterised in that** a spacer layer (15) is arranged between fibre composite semi-finished product (4) and adhesive layer (3).

17. Method according to any one of claims 1 to 16, **characterised in that** a latently reactive matrix resin is used for the wet pressing process, in particular a powder, doughy, pasty or liquid latently reactive matrix resin.

## Revendications

1. Procédé de fabrication d'un composant hybride (12) comportant un composant (9) en tôle métallique et un composant (10) en un matériau composite renforcé par des fibres,
**caractérisé par** les étapes suivantes :
- préparation d'une plaque de tôle (1),
- pose d'un produit semi-fini (4) composite renforcé par des fibres, plan et muni de résine matricielle, contre la plaque de tôle (1) ou pose d'un produit semi-fini plan renforcé par des fibres qui est muni de résine matricielle après la pose de manière à former un produit semi-fini (4) composite renforcé par des fibres,
- une couche adhésive (3) étant agencée entre la plaque de tôle (1) et le produit semi-fini (4) composite renforcé par des fibres,
- formage commun de la plaque de tôle (1) et du produit semi-fini (4) composite renforcé par des fibres dans un outil de formage, le formage pour le produit semi-fini (4) composite renforcé par des fibres étant effectué sous la forme d'un procédé de pressage humide.

2. Procédé selon la revendication 1, **caractérisé en ce que** la couche adhésive (3) est un adhésif thermoplastique ou thermodurcissable ou **en ce que** la couche adhésive comporte un adhésif à base d'élastomère ou d'époxy et/ou **en ce que** la couche adhésive (3) reçoit des impuretés de la plaque de tôle (1), notamment de l'huile et/ou de la graisse, de la plaque de tôle (1).

3. Procédé selon la revendication 1 ou 2, **caractérisé en ce que** la couche adhésive (3) durcit de manière élastique.

4. Procédé selon l'une quelconque des revendications précédentes, **caractérisé en ce qu'**on utilise une plaque de tôle (1) en un métal léger, en particulier en un aluminium, de préférence un alliage d'aluminium des séries 5000, 6000 ou 7000, ou **en ce qu'**on utilise une plaque de tôle (1) en un acier.

5. Procédé selon l'une quelconque des revendications précédentes, **caractérisé en ce que** la résine matricielle se trouve dans un état fluide lors du placement dans l'outil de formage et/ou **en ce que**, après l'application d'au moins une couche de fibres sur la plaque de tôle (1), la résine matricielle est appliquée sur la couche de fibres.

6. Procédé selon l'une quelconque des revendications précédentes, **caractérisé en ce que**, comme fibres du matériau composite renforcé par des fibres, on utilise des fibres de carbone, des fibres de verre, des fibres d'aramide, des fibres de métal, des biofibres ou des formes mélangées des types de fibres ci-dessus.

7. Procédé selon l'une quelconque des revendications précédentes, **caractérisé en ce que** la plaque de tôle (1) est chauffée avant le formage, en particulier avant la pose du produit semi-fini (4) composite renforcé par des fibres, ou **en ce que** l'outil de formage est chauffé, en particulier à une température comprise entre 100 et 200 °C, en particulier entre 130 et 170 °C, de préférence entre 140 et 160 °C.

8. Procédé selon l'une quelconque des revendications précédentes, **caractérisé en ce que** l'outil de formage n'est chauffé que partiellement, en particulier dans la zone du produit semi-fini (4) composite renforcé par des fibres.

9. Procédé selon l'une quelconque des revendications précédentes, **caractérisé en ce que**, après le formage, le composant hybride (12) est soumis à un procédé de peinture par immersion cathodique.

10. Procédé selon l'une quelconque des revendications précédentes, **caractérisé en ce qu'**on utilise un outil (6) de formage à la presse ou **en ce qu'**on utilise un outil de formage avec serre-flan.

11. Procédé selon l'une quelconque des revendications précédentes, **caractérisé en ce que** le composant hybride formé est au moins partiellement durci dans l'outil de formage sous une certaine pression et/ou à une certaine température, le durcissement partiel durant en particulier 3 minutes au maximum.

12. Procédé selon l'une quelconque des revendications précédentes, **caractérisé en ce que** des dilatations différentes et/ou des retraits différents entre plaque de tôle (1) formée et produit semi-fini (4) composite renforcé par des fibres formé sont compensés de telle sorte par la couche adhésive (3) qu'un contact d'appui est établi sur toute la surface entre la plaque de tôle (1) et le produit semi-fini (4) composite renforcé par des fibres au moyen d'un assemblage par collage à liaison de matière.

13. Procédé selon l'une quelconque des revendications précédentes, **caractérisé en ce que** la plaque de tôle (1) est, quant à sa surface, plus grande que le produit semi-fini (4) composite renforcé par des fibres.

14. Procédé selon l'une quelconque des revendications précédentes, **caractérisé en ce que** la couche adhésive (3) est, quant à sa surface, plus grande que le produit semi-fini (4) composite renforcé par des fibres de telle sorte que la couche adhésive (3) dépasse au bord, au moins partiellement, au-delà du produit semi-fini (4) composite renforcé par des fibres.

15. Procédé selon l'une quelconque des revendications précédentes, **caractérisé en ce que** le produit semi-fini (4) composite renforcé par des fibres est soumis, au moins dans des endroits au niveau desquels on s'attend à un formage plus important, à un traitement de surface réducteur de frottement sur le côté (16) proche de l'outil de formage, en particulier par lissage.

16. Procédé selon l'une quelconque des revendications précédentes, **caractérisé en ce qu'**une couche d'écartement (15) est agencée entre le produit semi-fini (4) composite renforcé par des fibres et la couche adhésive (3).

17. Procédé selon l'une quelconque des revendications 1 à 16, **caractérisé en ce que**, lors du procédé de pressage humide, on utilise une résine matricielle à réactivité latente, en particulier une résine matricielle à réactivité latente sous forme de poudre, de pâte ou de liquide.
